# EUROPÄISCHE PATENTSCHRIFT

(11) **EP 2 330 325 B1**
(45) Veröffentlichungstag und Bekanntmachung des Hinweises auf die Patenterteilung: **03.09.2014**
(21) Anmeldenummer: 10016240.3
(22) Anmeldetag: 13.07.2009
(51) Int. Cl.: C21D 1/74, F27D 7/04, F16K 1/20, F16K 31/524, F27B 5/16, C21D 9/00

(54) **Retortenofen zur Wärmebehandlung von metallischen Werkstücken**
Retort furnace for thermal treatment of metallic workpieces
Four à cornue pour le traitement thermique de pièces usinées métalliques

(30) Priorität: 24.07.2008 DE 202008009980 U; 08.08.2008 DE 202008010550 U; 22.08.2008 DE 202008011194 U
(43) Veröffentlichungstag der Anmeldung: 08.06.2011
(62) Teilanmeldung aus: 09775949.2
(73) Patentinhaber: Ipsen International GmbH, 47533 Kleve (DE)
(72) Erfinder: Sarres, Rolf, 46147 Oberhausen (DE); Schwall, Heinz, Dr., 52249 Eschweiler (DE)

(56) Entgegenhaltungen:
- EP-A1- 0 684 414
- US-A- 4 854 863

## Beschreibung

### Technisches Gebiet

Die Erfindung betrifft einen Retortenofen zur Wärmebehandlung, wie z. B. zum Blankanlassen, Glühen unter Stickstoff oder Stickstoff/Wasserstoff, Nitrieren oder Nitrokarburieren von metallischen Werkstücken, wobei der Retortenofen im Wesentlichen ein Ofengehäuse mit Retorte, eine Heizeinrichtung eine Umwälzeinrichtung und eine zugeordnete Kühleinrichtung umfasst und die von einem Ofengehäuse umgebene Retorte zylinderförmig ausgebildet und an einem Ende mittels eines Bodens gasdicht verschlossen und strömungstechnisch an zumindest zwei gasführende, mittels Stellklappen verschließbare Leitungen angeschlossen ist, die wiederum mit der Kühleinrichtung verbunden sind.

### Stand der Technik

Derartige Retortenöfen zur Wärmebehandlung von metallischen Werkstücken sind nach dem Stand der Technik in vielfältigen Anordnungen, wie z. B. gemäß DE-AS 2 010 433, DE- OS 27 54 034, DE 30 28 952 C2, DE 31 43 532 A1, DE 36 31 389 C2 und DE 103 38 431 A1 bekannt.

Weiterhin wird in US 4,854,863 A offenbart, einen Retortenofen mit einem die Retorte versorgenden Gasstrom heizend zu betreiben, welcher Gasstrom innerhalb der Retorte umgewälzt wird.

Im Kühlbetrieb strömt Umgebungsluft in den die Retorte umgebenden Volumenraum, und die Atmosphäre innerhalb der Retorte wird über einen Ringspalt umgewälzt, um den Wärmeaustausch mit dem Retortenmantel zu erhöhen.

Es wurde schon für Retortenöfen mehrmals vorgeschlagen, primär den Wirkungsgrad der Wärmebehandlung zu erhöhen. In Retortenöfen kommt jedoch nach der zu erzielenden gleichmäßigen Aufheizung der wärmezubehandelnden Werkstücke auch der anschließenden gleichmäßigen und intensiven Kühlung der Werkstücke eine besondere Bedeutung zu, was wegen des an sich unproduktiven Behandlungsschritts tiefer zu untersuchen ist, wobei zusammengefaßt von Folgendem ausgegangen wird.

Retortenöfen zur Wärmebehandlung metallischer Werkstücke umfassen eine von einem Ofengehäuse umgebene Retorte, die zylinderförmig ausgebildet und an einem Ende mittels eines Bodens gasdicht verschlossen ist. Zugleich verfügt die Retorte über eine Beschickungsöffnung, die dazu dient, die wärmezubehandelnden Werkstücke in die Retorte aufzugeben bzw. die wärmebehandelten Werkstücke der Retorte durch die Beschickungsöffnung hindurch zu entnehmen. Die Beschickungsöffnung ist mittels eines Deckels, der bevorzugterweise verschwenkbar ausgebildet ist, gasdicht verschließbar.

Das Ofengehäuse stellt in aller Regel einen Volumenraum bereit. Innerhalb dieses Volumenraumes ist unter anderem die Retorte angeordnet, die ihrerseits einen Volumenraum, den eigentlichen Wärmebehandlungsraum bereitstellt. Innerhalb des vom Ofengehäuse ausgebildeten Volumenraums sind neben der Retorte darüber hinaus Heizelemente vorgesehen, die bei einer bestimmungsgemäßen Verwendung des Retortenofens einem Aufheizen der Retorte und damit des von der Retorte umschlossenen Behandlungsraumes dienen.

Die Wärmebehandlung eines Werkstückes findet in aller Regel unter Gaseinfluss statt. Die Retorte verfügt deshalb vorzugsweise bodenseitig über Anschlußstutzen, die den Anschluss gasführender Leitungen ermöglichen. Durch diese Leitungen hindurch können in den von der Retorte definierten Behandlungsraum Gase und/oder Gasgemische wahlweise eingelassen werden. Derartige Gase können beispielsweise Behandlungsgase, Oxidationsgase, Kühlgase und/oder entsprechende Gasgemische sein.

Im Rahmen einer bestimmungsgemäßen Verfahrendurchführung zur Wärmebehandlung metallischer Werkstücke ist es regelmäßig vorgesehen, dass einem Verfahrensschritt der Werkstückerwärmung ein Verfahrensschritt folgt, bei dem die Werkstücke auf einem oder mehren -wärmebehandlungsabhängigen- Temperaturniveau gehalten werden und abschließend ein Verfahrensschritt der Werkstückabkühlung nachfolgt.

Sowohl beim Erwärmen als auch beim Kühlen wird angestrebt, die Werkstückerwärmung bzw. -abkühlung möglichst schnell und gleichmäßig durchzuführen. Während der Haltephase auf einem bestimmten Temperaturniveau wird innerhalb der Charge eine größtmögliche Temperaturgleichmäßigkeit der Werkstücke angestrebt, ebenso eine möglichst gleichmäßige Verfügbarkeit der Gase an jeder Stelle der Charge. Zu diesem Zweck wird die im Inneren der gasdicht abgeschlossenen Retorte befindliche Atmosphäre umgewälzt. Dies geschieht mittels einer Umwälzeinrichtung, welche in aller Regel im Inneren der Retorte angeordnet ist.

Um eine verbesserte Umwälzung und Gleichmäßigkeit der Ofenatmosphäre und - temperatur zu erzielen, ist es aus dem Stand der Technik bekannt, so genannte Gasführungszylinder einzusetzen, die in Kombination mit dem Umwälzaggregat eine Zwangsführung der Ofenatmosphäre gewährleisten.

Nach dem Stand der Technik ist weiter festzustellen, dass die Retorte strömungstechnisch an zumindest eine gasführende Leitung angeschlossen ist, welche Leitung mittels so genannter Stellklappen verschließbar ist. So kann beispielsweise zur Abkühlung der Werkstücke Gas aus der Retorte über eine gasführende Leitung abgesaugt, durch eine Kühleinrichtung geleitet und über eine zweite gasführende Leitung in die Retorte zurückgebracht werden.

Im Rahmen einer bestimmungsgemäßen Verfahrensdurchführung zur Wärmebehandlung metallischer Werkstücke mittels eines vorbeschriebenen Retortenofens wird es erforderlich, die gasführenden Leitungen gegenüber dem Retorteninnenraum abzutrennen, um zu verhindern, dass Gase in den Retorteninnenraum eintreten bzw. die im Retorteninnenraum befindliche Gasatmosphäre über die gasführenden Leitungen austritt. Um eine Abtrennung der gasführenden Leitungen gegenüber dem Retorteninnenraum zu bewerkstelligen, sind aus dem Stand der Technik die so genannten Stellklappen bekannt, die als in der jeweiligen gasführenden Leitung verschwenkbar angeordnete Scheiben ausgebildet sind. Diese Scheiben sind um wenigstens 90° drehbar und können so in eine geöffnete bzw. eine geschlossene Stellung gebracht werden. In der geschlossenen Stellung ist der Strömungsquerschnitt der gasführenden Leitung im Wesentlichen verschlossen, so dass eine Abtrennung der gasführenden Leitung zum Retorteninnenraum erreicht ist. In geöffneter Stellung ist der Strömungsquerschnitt der gasführenden Leitung im Wesentlichen freigegeben, so dass eine strömungstechnische Verbindung zwischen der gasführenden Leitung einerseits und dem Retorteninnenraum andererseits ausgebildet ist.

Auch hier haben sich die aus dem Stand der Technik vorbekannten Stellklappen zum Verschließen der strömungstechnisch an die Retorte des Retortenofens angeschlossenen, gasführenden Leitungen bewährt.

Allgemein sind Stellklappen in strömungsführenden Leitungen bekannt, wie sie nach EP 684 414 A1 zur Verringerung des Stömungsquerschnittes einer Leitung beschrieben sind. Dabei kann die Querschnittsffläche von Ventilen im Öffnungszustand durch Zurückfahren in einen Aufnahmeraum minimiert werden. Im Zusammenhang mit dem hier zu lösenden Problem erschließt sich für derartige Stellklappen eine vorteilhafte, neue Anwendung für gattungsgemäße Retortenöfen.

Darüber hinaus wurde schon gemäß der DE 103 12 650 B3 ein Wärmebehandlungsofen, insbesondere ein Drucksinterofen mit einem Ofengehäuse und einem vom Ofengehäuse gehaltenen und mit Abstand umschließenden, einen Kesselraum bildenden Isolationskäfig und einer im Inneren des Isolationskäfigs angeordneten, die Werkstückcharge umhüllenden mit dem Isolationskäfig einen Isolationsraum begrenzenden Muffel beschrieben. Dieser umfaßt eine Einrichtung für den Einlaß von Kühlgas aus einem Gasvorratsbehälter in die von dem Ofengehäuse, dem Isolationskäfig und der Muffel begrenzten Räume.

Dieser Wärmebehandlungsofen sollte dahingehend verbessert werden, um bei dessen geschlossener Isolation und geschlossener Muffel eine beschleunigte Abkühlung der Charge zu erreichen und des weiteren durch eine gezielte Ein- und Umströmung einzelne Ofenbereiche getrennt kühlen zu können. Der Wärmebehandlungsofen wurde so ausgelegt, daß im Bedarfsfall auf eine externe Kühleinrichtung mit Wärmetauscher und zusätzlichem Gebläse geschaltet werden kann. Dazu wurde ein Mehrwegeventil mit einem durch den Isolationskäfig und die Muffel hindurchgeführten Ventilgehäuse mit mindestens drei Gasaustrittsöffnungen vorgesehen. An den jeweils einander diametral gegenüberliegenden Stirnwänden des Isolationskäfigs und den Stirnwänden der Muffel wurden am Ofengehäuse angelenkte und gegenüber den Stirnwänden des Ofengehäuses verschließbare Partien des Isolationskäfigs und der Muffel angeordnet.

Betrachtet der Fachmann diese Ausführung im Hinblick auf die Übertragung auf gattungsgemäße Retortenöfen der eingangs beschriebenen Art, ist eine gleichmäßige und möglichst schnelle Kühlung der wärmebehandelten Werkstücke unproduktiv und gerätetechnisch aufwendig, wenn ein Gasstrom aus der Retorte abgesaugt, über eine externe Kühleinrichtung geleitet und anschließend wieder in die Retorte zurückgeführt werden muß.

### Darstellung der Erfindung

Aufgabe der Erfindung ist es, bei gattungsgemäßen Retortenöfen gemäß dem Oberbegriff des Anspruches 1 und der eingangs beschriebenen Art, eine gleichmäßige und möglichst schnelle Kühlung der wärmebehandelten Werkstücke zu erreichen, weil das Abkühlen zwar erforderlich, im Grunde aber ein unproduktiver Verfahrensschritt ist.

Da zur Kühlung der Werkstücke ein Gasstrom aus der Retorte abgesaugt, über eine externe Kühleinrichtung geleitet und anschließend wieder in die Retorte zurückgeführt wird, ist es erforderlich, das kalte Gas möglichst gut umzuwälzen und Widerstände, die den Kühlvolumenstrom behindern, zu vermeiden.

Dazu sind die Ausbildung eines Bodens der Retorte und an die Retorte des Retortenofens angeschlossenen, gasführenden Leitungen konstruktiv zu verändern, damit insgesamt strömungstechnisch günstigere Bedingungen entstehen.

Die Aufgabe wird entsprechend den Ansprüchen 1 bis 14 gelöst.

Demnach ist vorgesehen, daß bei einem Retortenofen zur Wärmebehandlung von metallischen Werkstücken der Boden unter Ausbildung eines Zwischenraumes einen zweiten Boden umfasst, d.h. doppelwandig ausgebildet ist, und dieser Zwischenraum durch einen ersten Volumenraum und einen zweiten Volumenraum in zwei voneinander gasdicht getrennte Ringräume unterteilt ist, welcher erster Volumenraum mit der zweiten Leitung und welcher zweiter Volumenraum mit der ersten Leitung verbunden ist, wodurch die Umwälzung des kalten Gases mittels eines strömungsgünstigen Kühlvolumenstroms und somit die Abkühlung der Charge beschleunigbar ist.

Eine erste und zweite Stellklappe bilden je ein einen Aufnahmeraum umfassendes Gehäuse, in welches ein Deckel derart hineinbewegbar ist, daß der Strömungsquerschnitt jeder Leitung bei geöffneter Stellung des Deckels vollständig freigegeben, eine strömungsgünstige Ausbildung des Aufnahmeraum gegeben und ein gasförmiger Volumenstrom in jeder Leitung strömungsgünstig führbar ist.

Die Erfindung bewirkt, daß der erste Volumenraum und der zweite Volumenraum im strömungstechnischen Zusammenwirken mit den bei geöffneter Stellung des Deckels den Strömungsquerschnitt jeder Leitung vollständig freigebenden Funktionen des Deckels zu einer strömungsgünstigen Umwälzung des kalten Gases und somit schnellen Abkühlung der Charge führen.

Der Außendurchmesser des zweiten Bodens des Bodens ist kleiner als der Innendurchmesser der Retorte bemessen.

Des Weiteren können der äußere erste Volumenraum strömungstechnisch über die zweite Leitung an ein externes Kühlgasgebläse und der innere zweite Volumenraum strömungstechnisch über die erste Leitung an einen externen Kühler angeschlossen werden, wodurch das in der Retorte befindliche Heißgas abgeführt und an den externen Kühler weitergeleitet werden kann.

Vorteilhaft kann der innere zweite Volumenraum an Saugrohre angeschlossen werden, die mit dem von der Retorte umschlossenen Behandlungsraum verbunden sind.

Schließlich wird die Erfindung vervollkommnet, wenn der erste Volumenraum und der zweite Volumenraum gasdicht durch einen Ring in die zwei voneinander gasdicht getrennten Ringräume unterteilt wird, der fertigungstechnisch günstig z.B. durch Schweißen einfügbar ist.

Zweckmäßig weist der in dem Aufnahmeraum des Gehäuses einer jeden Stellklappe bewegbare Deckel einen Schwenkarm auf, der um einen Drehpunkt an einem Haltearm verschwenkbar angeordnet ist.

Der Schwenkarm kann um > 90° verschwenkbar am Haltearm angeordnet werden und wird zweckmäßig mit einem Antrieb verbunden ist, der durch einen pneumatischen Stellzylinder gebildet sein kann.

Das Gehäuse sollte austauschbar mittels einer ersten Flanschverbindung und einer zweiten Flanschverbindung in je eine der Leitungen lösbar angeordnet sein und montagegünstig eine mittels einer Klappe verschließbare Installationsöffnung aufweisen.

Der besagte Antrieb kann vorteilhaft auf der Klappe angeordnet werden, wobei die Klappe eine gasdichte Durchführung für die Kolbenstange aufweist, welche mittels eines Koppelelements der Kolbenstange und eines Langlochs des Schwenkarms zur Betätigung des Deckels angelenkt ist. Dabei kann der Haltearm funktionsgünstig an der Klappe angeordnet sein.

Mit der erfindungsgemäßen Ausbildung des einen Bodens der Retorte, indem dieser eine Boden der Retorte unter Ausbildung eines Volumenraumes doppelwandig ausgebildet und in zwei voneinander gasdicht getrennte Ringräume unterteilt ist sowie dem erfindungsgemäß veränderten Konstruktionsprinzip, dass die mittels der Stellklappen verschließbaren gasführenden Leitungen an ein einen Aufnahmeraum umfassendes Gehäuse angeschlossen ist, in welches der Deckel hineinbewegbar ist, so dass der Strömungsquerschnitt der Leitung bei geöffneter Deckelstellung vollständig freigegeben ist, wird die Aufgabenstellung im Hinblick auf die insgesamt verbesserten Strömungsverhältnisse im Retortenofen optimal gelöst.

Erfolge stellen sich mit der doppelwandigen Bodenausbildung deshalb ein, da das kalte Gas so besser umgewälzt wird und in vorteilhafter Weise eine außergewöhnlich gute Umwälzung der Ofenatmosphäre und damit Durchströmung der wärmezubehandelnden Werkstücke geschaffen wird.

Weitere strömungstechnisch günstigere Bedingungen werden auch mit der veränderten Deckelbewegung in den Stellklappen für das kalte Gas insgesamt geschaffen.

In dieser kombinierten Ausführung verschmelzen in ihrer strömungstechnischen Wirkung die doppelwandige Bodenausbildung und die veränderte Deckelbewegung funktionell miteinander.

Hervorzuheben ist, daß in den äußeren Ringraum mittels des externen Kühlgasgebläses von außen ein Kühlgas oder ein Kühlgasgemisch eingespeist werden kann.

Der innere Ringraum steht mit dem eigentlichen und von der Retorte umschlossenen Behandlungsraum der Charge in strömungstechnischer Verbindung. Zu diesem Zweck sind die Saugrohre vorgesehen, die den inneren Ringraum mit dem Behandlungsraum der Retorte strömungstechnisch verbinden.

In den äußeren Ringraum eingespeistes Kühlgas kann auch durch Öffnungen in den von der Retorte umschlossenen Behandlungsraum strömen. Dabei sind die Verbindungsöffnungen in Abhängigkeit der Kühlgebläseleistung derart dimensioniert, dass das im äußeren Ringraum befindliche Kühlgas mit verhältnismäßig hoher Geschwindigkeit aus den Öffnungen austreten und in den von der Retorte umschlossenen Behandlungsraum eintreten kann.

Die den äußeren Ringraum mit dem Behandlungsraum der Retorte strömungstechnisch verbindenden Durchgangsöffnungen sind bevorzugterweise stirnseitig der inneren Wandung des doppelwandigen Bodens ausgebildet, das heißt zwischen innerer Wandung einerseits und Mantelfläche der Retorte andererseits.

Diese Ausgestaltung kann beispielsweise dadurch erreicht werden, dass der Außendurchmesser der retortenseitigen Wand, das heißt der inneren Wand des doppelwandigen Bodens kleiner als der Innendurchmesser der Retorte ausgebildet ist, infolgedessen ein Ringspalt zwischen innerer Wand des doppelwandigen Bodens einerseits und Innenseite der Mantelfläche der Retorte andererseits entsteht. Dieser Ringspalt kann in einzelne Durchtrittsöffnungen zu unterteilt sein, was sich beispielsweise dadurch ergibt, dass die innere Wand des doppelwandigen Bodens stirnseitig mit der Mentalfläche der Retorte in gewissen Abständen verbunden, beispielsweise verschweißt ist.

Die vorgeschriebene Ausgestaltung des Ringspaltes, das heißt der Durchtrittsöffnungen, die den äußeren Ringraum mit dem Behandlungsraum der Retorte strömungstechnische verbinden, hat den Vorteil, dass das über den äußeren Ringraum einströmende Kühlgas in unmittelbarer Nähe zum Retortenmantel und parallel zum selben in den Behandlungsraum der Retorte eingeführt wird.

Hierdurch wird eine insgesamt außergewöhnlich gute Durchströmung einer in der Retorte befindlichen Werkstückcharge erreicht, was zu einer entsprechend sehr guten Wärmeübertragung zwischen Gasstrom einerseits und Werkstückcharge andererseits führt.

Die vorgeschriebene Ausgestaltung erlaubt es, mittels der in den von der Retorte umfassten Volumenraum verbindenden Ansaugrohre das in der Retorte befindliche heiße Gas, das heißt die dort befindliche heiße Atmosphäre abzusaugen, wobei die abgesaugten Gase, das heißt die abgesaugte Atmosphäre über den inneren Ringraum des doppelwandig ausgebildeten Bodens der Retorte abgeführt wird.

Zwecks Ansaugung ist der innere Ringraum an den Kühler angeschlossen. Die abgesaugten Gase werden durch den Kühler geführt und zur Abkühlung gebracht. Die Wiederverwendung dieses Gases, das heißt der ehemaligen Behandlungsatmosphäre ist möglich, bevorzugterweise als Kühlgas, welches dem äußeren Ringraum des doppelwandigen Bodens der Retorte wieder zugeführt wird. Dies kann mittels Unterstützung des erwähnten Kühlgasgebläses erfolgen.

Das im äußeren Ringraum beförderte Kühlgas tritt in den Nutz-, das heißt Behandlungsraum der Retorte wieder aus, und dies bevorzugterweise retortenmantelnah, so dass das einströmende Kühlgas nahe der Innenseite der Mantelfläche der Retorte parallel hierzu zwangsgeführt ist. Im Ergebnis ergibt sich so eine Strömung im Inneren der Retorte, die sich dadurch auszeichnet, dass heiße Gase bzw. heiße Ofenatmosphäre aus dem inneren Bereich des von der Retorte umschlossenen Volumenraums abgeführt, gleichzeitig Kühlgas in den äußeren Randbereich des von der Retorte umschlossenen Volumenraums nachgeführt wird, so dass ich eine Strömungszirkulation in der Retorte einstellt und zwar als Addition der Volumenströme des externen Kühlgebläses einerseits und der in der Retorte befindlichen Umwälzeinrichtung andererseits. Im Ergebnis dieser Strömungszirkulation ergibt sich eine im Vergleich zum Stand der Technik verbesserte Gasdurchströmung der in der Retorte befindlichen Werkstückcharge, was zu einer besseren Wärmeübertragung zwischen Werkstückcharge und Gas bzw. Gasgemisch, d.h. zu einer schnelleren Abkühlung der Charge führt.

Die vorbeschriebene Konstruktion kann bei Retortenöfen im allgemeinen Anwendung finden, das heißt sie ist sowohl für horizontale als auch für vertikale Retortenöfen nutzbar.

Diese vorteilhaften Funktionen unterstützt die erfindungsgemäße Ausgestaltung der Stellklappen, für die eine den Aufnahmeraum bereitstellende Erweiterung in Form eines Gehäuses vorgesehen ist. In das Gehäuse bzw. in den Aufnahmeraum hinein ist der Deckel bewegbar, und zwar derart, dass der lichte Strömungsquerschnitt der gasführenden Leitung bei geöffneter Deckelstellung vollständig freigegeben ist.

Diese Ausgestaltung erlaubt es in vorteilhafter Weise, dass im Unterschied zum vorbekannten Stand der Technik unnötige Strömungswiderstände vermieden werden. Beim Öffnen einer aus dem Stand der Technik bekannten Drehklappe verdreht sich diese nachteilig von einer Querstellung in eine Längsstellung, in welcher sie aber zumindest noch teilweise den Strömungsquerschnitt der gasführenden Leitung abdeckt.

Dies führt in nachteiliger Weise zu einem unnötigen Strömungswiderstand, was zu einer Drosselung der Leistung des an die gasführende Leitung angeschlossenen Gasgebläses und damit zu einer Reduzierung des Gasvolumenstroms führt.

Bei dem nach EP 684 414 A1 übernommenen Prinzip, aber mit weiterentwickelten Details den hiesigen Bedingungen angepasst, werden diese Nachteile überwunden, da der Deckel in geöffneter Stellung in eine einen Aufnahmeraum bereitstellende Erweiterung hinein bewegt ist, womit der Strömungsquerschnitt der gasführenden Leitung vollständig freigegeben ist und die Entstehung unnötiger Strömungswiderstände vollends vermieden wird.

Gemäß der erfindungsgemäßen Anpassung ist vorgesehen, dass der Deckel verschwenkbar ausgebildet ist. Demnach erfolgt die Bewegung des Deckels als Schwenkbewegung in das einen Aufnahmeraum bereitstellende Gehäuse. Diese Verschwenkbarkeit des Deckels kann beispielsweise dadurch realisiert werden, dass der Deckel an einem Schwenkarm und dieser gelenkig beispielsweise an einem Haltearm angeordnet ist.

Der Schwenkarm und damit der daran angeordnete Deckel können somit auf einfache Weise relativ zum Haltearm verschwenkt werden. Dabei ist bevorzugterweise eine Verschwenkbewegung des Schwenkarmes um wenigstens 90°, mehr bevorzugt um 95° möglich.

Eine zumindest theoretische Verschwenkbarkeit von mehr als 90° bietet den Vorteil, dass der Deckel mit einem gewissen Anpressdruck gegen einen Anschlußstutzen der gasführenden Leitung gedrückt werden kann, was insbesondere in Kombination mit einer leitungsseitig und/oder deckelseitig vorgesehenen Dichtung einen gasdichten Verschluss der gasführenden Leitung bewirkt.

Bei den bisher für Retortenöfen aus dem Stand der Technik als Deckel verwendeten Verschlussklappen ist eine solche gasdichte Entkopplung von gasführender Leitung einerseits und Retorteninnenraum andererseits nicht möglich, weil aufgrund von Fertigungstoleranzen, Abnutzungserscheinungen und/oder thermisch bedingten unterschiedlichen Ausdehnungen immer ein Ringspalt zwischen der Innenseite einer gasführenden Leitung einerseits und der Verschlussklappe andererseits verbleibt.

Gemäß einer Ausbildung des Deckels ist vorgesehen, dass der Schwenkarm an einen Stellzylinder angelenkt ist. Mittels dieses Stellzylinders kann eine Verschwenkung des Schwenkarms relativ gegenüber dem Haltearm bewirkt werden. Der Stellzylinder arbeitet vorzugsweise pneumatisch. Es sind aber auch andere Ausgestaltungen möglich, wie zum Beispiel hydraulisch oder mechanisch arbeitende Stellzylinder bzw. Stellglieder.

Aufgrund dieser Ausgestaltung kann die Deckeleinrichtung als solche in vorteilhafter Weise auch im Rahmen einer Nachrüstung installiert bzw. montiert werden. In einfacher Weise werden die Stellklappen zwischen den Flanschverbindungen der gasführenden Leitungen als Zwischenglied installiert.

Zweckmäßig verfügt das Gehäuse über die Installationsöffnung. Diese ermöglicht auch einen nachträglichen Zugriff auf die Verstellmechanik des Deckels, das heißt insbesondere den Schwenkarm sowie auf den Deckel selbst und gegebenenfalls auch den Stellzylinder. In einfacher Weise ist so eine Demontage, Reparatur oder sonstige nachträgliche Arbeit möglich. Die Installationsöffnung ist dabei bevorzugterweise mittels einer entsprechend ausgebildeten Klappe gasdicht verschließbar.

Optimal ist es, wenn die doppelwandige Bodenausbildung und veränderte Deckelbewegung kombiniert in einem Retortenofen zur Anwendung gelangen, weil damit die Aufgabe der Erfindung, bei gattungsgemäßen Retortenöfen eine gleichmäßige und intensive Kühlung der wärmebehandelten Werkstücke zu erreichen, das kalte Gas besser umzuwälzen und unnötige Widerstände, die den Kühlvolumenstrom behindern, maximal erreicht werden.

Die erfindungsgemäße Ausbildung des Bodens der Retorte und die der Stellklappen zum funktionssicheren Verschließen der an die Retorte des Retortenofens angeschlossenen, gasführenden Leitungen schaffen für das kalte Gas somit insgesamt strömungstechnisch günstigere Bedingungen, die eine schnellere Kühlung der Charge bewirken.

### Kurze Beschreibung der Zeichnungen

In den zugehörigen Zeichnungen zeigen in einem schematischen Ausführungsbeispiel der Erfindung
- Fig. 1: die Ansicht in einem Schnitt eines erfindungsgemäßen Retortenofens,
- Fig. 2.: eine vergrößerte Ansicht nach Fig. 1 mit der erfindungsgemäßen doppelwandigen Ausbildung des Bodens 9 durch den zweiten Boden 9.1 und
- Fig. 3: die Ansicht einer Stellklappe als Einzelheit im Längsschnitt

### Bester Weg zur Ausführung der Erfindung

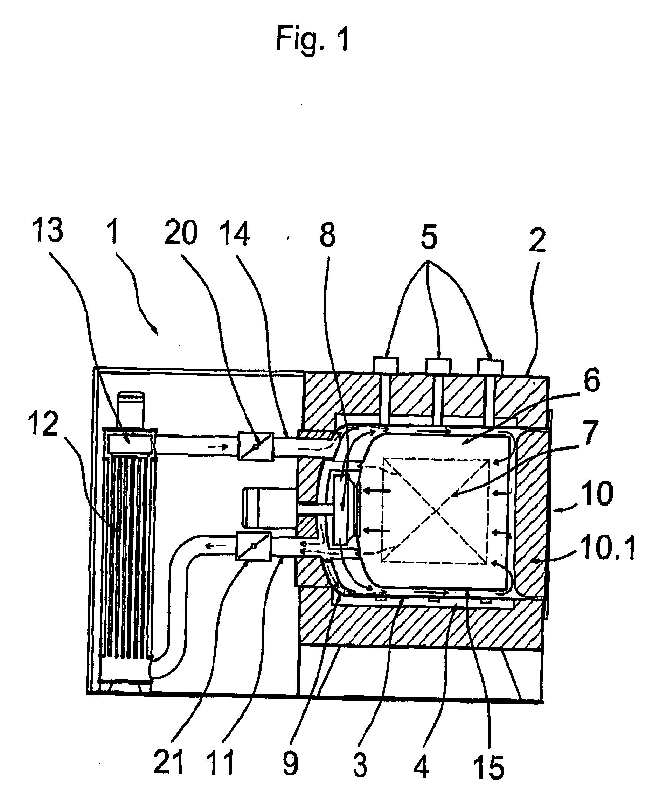

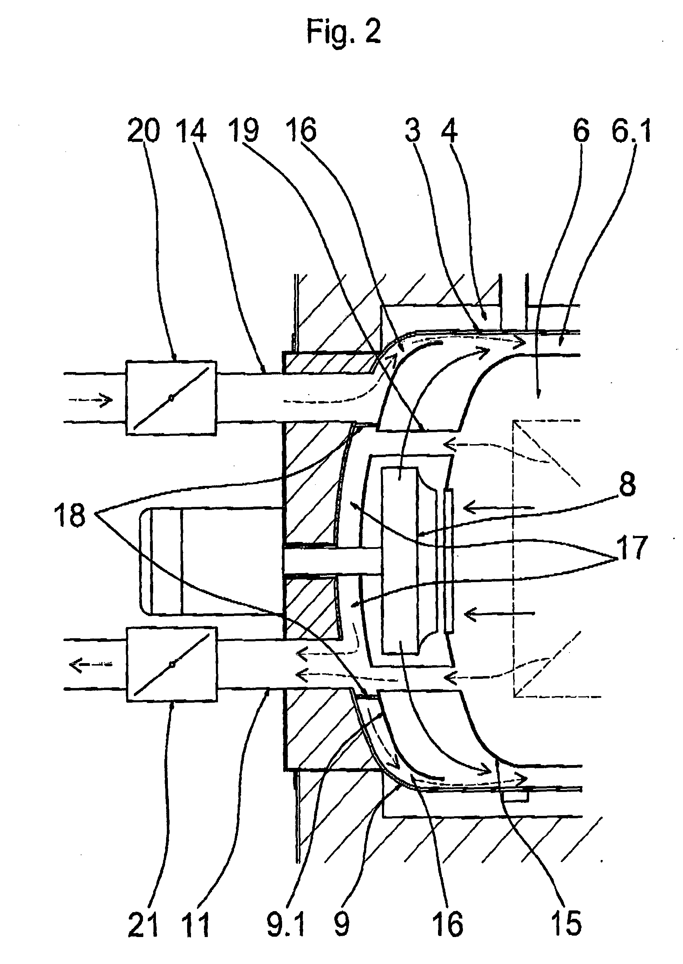

In Fig. 1 und 2 ist in einer schematischen Darstellung ein Retortenofen 1 nach der Erfindung im Längsschnitt dargestellt. Der Retortenofen 1 ist im gezeigten Ausführungsbeispiel mit horizontal ausgerichteter Retorte 3 ausgestattet, das heißt ein horizontaler Retortenofen 1. Der Retortenofen 1 weist ein Ofengehäuse 2 auf. Dieses umschließt einen ersten Volumenraum 4, innerhalb welchem unter anderem die Retorte 3 und eine Heizeinrichtung 5 angeordnet sind. Das Ofengehäuse 2 nimmt demnach die Retorte 3 und die Heizeinrichtung 5 auf.

Die Retorte 3 ist als zylinderförmiger Hohlkörper ausgebildet. Dieser Hohlkörper ist zu einem Ende mittels eines Bodens 9 gasdicht verschlossen. Die Retorte 3 weist dem Boden 9 gegenüberliegend eine Beschickungsöffnung 10 auf, die mittels eines Deckels 10.1 gasdicht verschließbar ist. Über die Beschickungsöffnung 10 ist ein von der Retorte 3 umschlossener zweiter Volumenraum 6, der den eigentlichen Nutz-, das heißt Behandlungsraum des Retortenofens 1 darstellt, erreichbar. Über die Beschickungsöffnung 10 werden wärmezubehandelnde Werkstücke, die beispielsweise zu einer Charge 7 zusammengefasst sind, in die Retorte 3 gegeben. Ein Entladen der Retorte 3 findet gleichfalls über die Beschickungsöffnung 10 statt.

Die vom Ofengehäuse 2 aufgenommene Heizeinrichtung 5 dient der Erwärmung des vom Ofengehäuse 2 umschlossenen ersten Volumenraums 4, der allgemein als Ofenraum bezeichnet wird. Infolge der Erwärmung dieses Ofenraums wird durch Wärmeübertragung die Retorte 3 erwärmt, was zu einer Erwärmung der im Inneren der Retorte 3 angeordneten Charge 7 führt.

In dem von der Retorte 3 umschlossenen zweiten Volumenraum 6 erfolgt die Wärmebehandlung unter einer Gasatmosphäre. Um eine gute Umwälzung der Gasatmosphäre und eine gleichmäßige Temperatur innerhalb des zweiten Volumenraums 6 zu erreichen, wird mittels einer Umwälzeinrichtung 8 sowie mittels einer Leiteinrichtung 15 eine Gasströmung durch die Charge 7 erzeugt. Die Leiteinrichtung 15 ist zylindrisch ausgebildet, wodurch ein Ringraum 6.1 zwischen der Innenwand der Retorte 3 und der Leiteinrichtung 15 entsteht. Das Gas strömt durch diesen Ringraum 6.1 in Richtung der Pfeile nach vorne zur Seite des Deckel 10.1 und anschließend durch die Charge 7 nach hinten zum Umwälzeinrichtung 8, welche Strömung durch die weiteren Pfeile angedeutet ist.

Die zur Wärmebehandlung erforderlichen Gase können beispielsweise durch hier nicht dargestellte Rohre, die mit dem Boden 9 strömungstechnisch verbunden sind, in die Retorte 3 eingelassen werden.

Nach Durchführung der Wärmebehandlung erfolgt die Abkühlung der Charge 7, deren erfindungsgemäße Wirkung durch wesentlich neue Merkmale hervorzuheben ist.

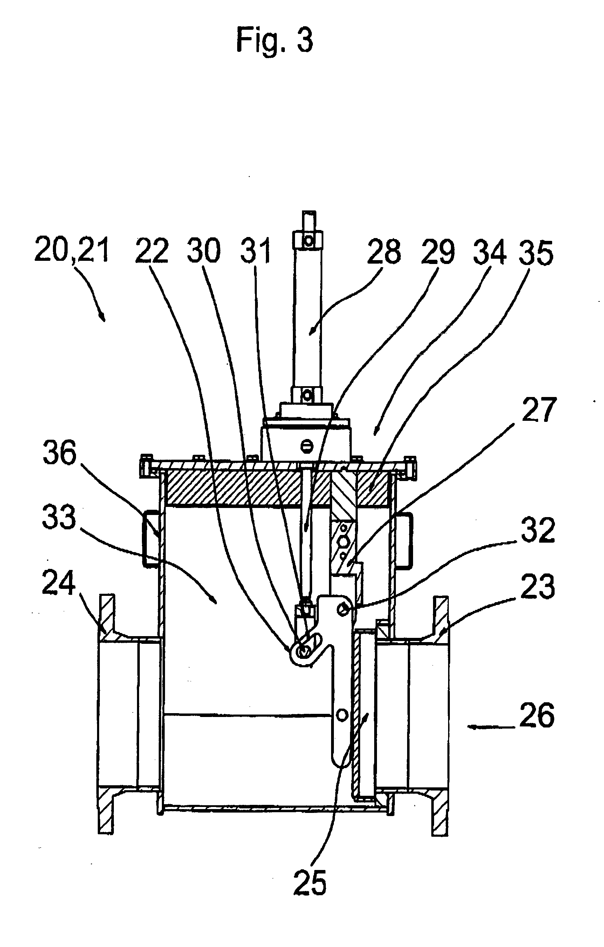

Zunächst wird Gas aus der Retorte 3 über eine als Ansaugrohr ausgebildete erste Leitung 11, die mit dem Boden 9 verbunden ist, durch einen Kühler 12 mittels eines externen Kühlgasgebläses 13 abgesaugt und durch eine als Einlassrohr ausgebildete zweite Leitung 14 wieder in die Retorte 3 zurückgeleitet. Zwischen dem Boden 9 und der Umwälzeinrichtung 8 befindet sich erfindungsgemäß ein zweiter Boden 9.1, dessen Durchmesser kleiner ist als der Innendurchmesser der Retorte 3. Zwischen den Böden 9 und 9.1 ist ein Volumenraum ausgebildet, der durch einen umlaufenden Ring 18 in einen inneren Volumenraum 17 und einen äußeren Volumenraum 16 unterteilt ist. Der innere Volumenraum 17 ist mittels Saugohren 19 mit dem zweiten Volumenraum 6, in dem sich die Charge 7 befindet, und mit der das Absaugrohr bildenden ersten Leitung 11 strömungstechnisch verbunden. Der äußere Volumenraum 16 ist mit dem Ringraum 6.1 und mit der das Einlassrohr bildenden zweiten Leitung 14 strömungstechnisch verbunden. Auf diese Weise wird heißes Gas aus dem Behandlungsraum 6 abgesaugt, und kaltes Gas in den Ringraum 6.1 eingeblasen. Während der Wärmebehandlung sind die Rohre 11 und 14 mittels Deckel 25 (Fig. 3) in ersten und zweiten Stellklappen 20, 21 verschlossen.

Die Stellklappen 20, 21 sind in Figur 3 näher dargestellt. Sie sind mittels Flanschverbindungen 23, 24 in die Leitungen 11, 14 eingebaut. Sie weisen einen Deckel 25 auf, der eine Eintrittsöffnung 26 in den Leitungen 11, 14 vollständig gasdicht verschließt. Der Deckel 25 ist an einem Haltearm 27 am Drehpunkt 32 drehbar befestigt. Über einen Schwenkarm 22 sowie ein Koppelelement 30, welches in ein Langloch 31 am Schwenkarm 22 eingreift, ist der Deckel 25 mit einer Kolbenstange 29 eines Antriebs 28 wie Stellzylinder befestigt. Durch Ein- und Ausfahren der Kolbenstange 29 wird der Deckel 25 geöffnet bzw. geschlossen. Der Deckel 25 schwenkt im geöffneten Zustand in einen Aufnahmeraum 33 hinein, dadurch wird im geöffneten Zustand der gesamte Strömungsquerschnitt der Eintrittsöffnung 26 freigegeben. Haltearm 27 und Antrieb 28 wie Stellzylinder sind mit einer Klappe 35 verbunden, die vollständig demontiert werden kann, so dass über die Installationsöffnung 34 die Anordnung frei zugänglich ist.

### Gewerbliche Anwendbarkeit

Die durch die erfindungsgemäß veränderte Anordnung des doppelten Bodens und die durch die veränderte Deckelbewegung erzielten Wirkungen schaffen dem Betreiber eines Retortenofens eine wesentliche Gebrauchswerterhöhung im Hinblick auf eine wesentlich schnellere Abkühlung der wärmebehandelten Werkstücke.

### Bezugszeichenliste

- 1: Retortenofen
- 2: Ofengehäuse
- 3: Retorte
- 4: erster Volumenraum
- 5: Heizeinrichtung
- 6: Behandlungsraum
- 6.1: Ringraum
- 7: Charge
- 8: Umwälzeinrichtung
- 9: Boden
- 9.1: zweiter Boden
- 10: Beschickungsöffnung
- 10.1: Deckel
- 11: erste Leitung
- 12: Kühler
- 13: Kühlgasgebläse
- 14: zweite Leitung
- 15: Leiteinrichtung
- 16: äußerer Volumenraum
- 17: innerer Volumenraum
- 18: Ring
- 19: Saugrohr
- 20: erste Stellklappe
- 21: zweite Stellklappe
- 22: Schwenkarm
- 23: erste Flanschverbindung
- 24: zweite Flanschverbindung
- 25: Deckel
- 26: Eintrittsöffnung
- 27: Haltearm
- 28: Antrieb/Stellzylinder
- 29: Kolbenstange
- 30: Koppelelement
- 31: Langloch
- 32: Drehpunkt
- 33: Aufnahmeraum
- 34: Installationsöffnung
- 35: Klappe
- 36: Gehäuse

## Patentansprüche

1. Retortenofen (1) zur Wärmebehandlung von metallischen Werkstücken, aufweisend eine von einem Ofengehäuse (2) mit Heizeinrichtung (5) umgebene, zylinderförmig ausgebildete Retorte (3), die
a) einen Behandlungsraum (6) für eine Charge (7) von Werkstücken umschließt,
b) an einem Ende mittels eines Bodens (9) gasdicht verschlossen und dort strömungstechnisch an zumindest zwei gasführende, mittels je einer Stellklappe (20, 21) verschließbare Leitungen (11, 14) angeschlossen ist und
c) am anderen Ende eine gasdicht verschließbare Beschickungsöffnung (10) aufweist,
wobei zur Kühlung der Charge (7) von Werkstücken ein Gasstrom aus der Retorte (3) abgesaugt, über eine externe Kühleinrichtung geleitet und anschließend wieder in die Retorte (3) zurückgeführt und ein kaltes Gas umgewälzt wird, **dadurch gekennzeichnet, dass**
d) der Boden (9) unter Ausbildung eines Zwischenraumes einen zweiten Boden (9.1) umfasst und dieser Zwischenraum durch einen ersten Volumenraum (16) und einen zweiten Volumenraum (17) in zwei voneinander gasdicht getrennte Ringräume unterteilt ist, welcher erster Volumenraum (16) mit der **zweiten** Leitung (14) und welcher zweiter Volumenraum (17) mit der ersten Leitung (11) verbunden ist, wodurch die Umwälzung des kalten Gases mittels eines strömungsgünstigen Kühlvolumenstroms und somit eine Abkühlung der Charge (7) beschleunigbar ist,
e) mittels die Volumenräume (16, 17) verbindender Leitungen (11, 14) oder Saugrohre (19) das in der Retorte (3) befindliche heiße Gas absaugbar und das abgesaugte Gas über den inneren Ringraum des doppelwandig ausgebildeten Bodens (9) der Retorte (3) abführbar ist,
f) der innere Ringraum an einen das abgesaugte Gas führbaren Kühler (12) angeschlossen ist, wobei das Gas als Kühlgas über den äußeren Ringraum des doppelwandigen Bodens (9) der Retorte (3) mittels eines Kühlgasgebläses (13) wieder in den Behandlungsraum (6) der Retorte einströmbar ist und
g) im Ergebnis eine derartige Strömungszirkulation im Inneren der Retorte (3) entsteht, die die heiße Ofenatmosphäre aus dem inneren Bereich des von der Retorte (3) umschlossenen Volumenraums abführbar und gleichzeitig Kühlgas in den äußeren Randbereich des von der Retorte umschlossenen Volumenraums nachführbar macht, und zwar in Addition der Volumenströme des externen Kühlgebläses einerseits und einer in der Retorte (3) angeordneten Umwälzeinrichtung (8) andererseits.

2. Retortenofen (1) nach Anspruch 1, **dadurch gekennzeichnet, dass** h)
die erste und zweite Stellklappe (20, 21) je ein einen Aufnahmeraum (33) umfassendes Gehäuse (36) bilden, in welches ein Deckel (25) derart hineinbewegbar ist, dass der Strömungsquerschnitt jeder Leitung (11,14) bei geöffneter Stellung des Deckels (25) vollständig freigegeben ist und
i) der erste Volumenraum (16) und der zweite Volumenraum (17) im strömungstechnischen Zusammenwirken mit dem bei geöffneter Stellung des Deckels (25) den Strömungsquerschnitt jeder Leitung (11,14) vollständig freigebenden Funktionen des Deckel (25) zu einer strömungsgünstigen Umwälzung des kalten Gases und somit schnellen Abkühlung der Charge (7) führen.

3. Retortenofen nach Anspruch 1 oder 2, **dadurch gekennzeichnet, dass** der Außendurchmesser des zweiten Bodens (9.1) des Bodens (9) kleiner als der Innendurchmesser der Retorte (3) bemessen ist.

4. Retortenofen nach einem der Ansprüche 1 bis 3, **dadurch gekennzeichnet, dass** der äußere erste Volumenraum (16) strömungstechnisch über die zweite Leitung (14) an das externes Kühlgasgebläse (13) angeschlossen ist.

5. Retortenofen nach einem der Ansprüche 1 bis 3, **dadurch gekennzeichnet, dass** der innere zweite Volumenraum (17) strömungstechnisch über die erste Leitung (11) an einen externen Kühler (12) angeschlossen ist.

6. Retortenofen nach einem der Ansprüche 1 bis 5, **dadurch gekennzeichnet, dass** der innere zweite Volumenraum (17) an die Saugrohre (19) angeschlossen ist, die mit dem von der Retorte (3) umschlossenen Behandlungsraum (6) verbunden sind.

7. Retortenofen nach einem der Ansprüche 1 bis 6, **dadurch gekennzeichnet, dass** der erste Volumenraum (16) und der zweite Volumenraum (17) durch einen Ring (18) in zwei voneinander gasdicht getrennte Ringräume unterteilt ist.

8. Retortenofen nach einem der Ansprüche 1 bis 7, **dadurch gekennzeichnet, dass** der in dem Aufnahmeraum (33) des Gehäuses (36) einer jeden Stellklappe (20, 21) bewegbare Deckel (25) einen Schwenkarm (22) aufweist, der um einen Drehpunkt (32) an einem Haltearm (27) verschwenkbar angeordnet ist.

9. Retortenofen nach einem der Ansprüche 1 bis 8, **dadurch gekennzeichnet, dass** der Schwenkarm (22) um > 90° verschwenkbar am Haltearm (27) angeordnet ist.

10. Retortenofen nach einem der Ansprüche 1 bis 9, **dadurch gekennzeichnet, dass** der Schwenkarm (22) mit einem Antrieb (28) verbunden ist.

11. Retortenofen nach einem der Ansprüche 1 bis 10, **dadurch gekennzeichnet, dass** der Antrieb (28) durch einen pneumatischen Stellzylinder gebildet ist.

12. Retortenofen nach einem der Ansprüche 1 bis 11, **dadurch gekennzeichnet, dass** das Gehäuse (36) mittels einer ersten Flanschverbindung (23) und einer zweiten Flanschverbindung (24) in je eine der Leitungen (11, 14) lösbar angeordnet sind.

13. Retortenofen nach einem der Ansprüche 1 bis 12, **dadurch gekennzeichnet, dass** das Gehäuse (36) eine mittels einer Klappe (35) verschließbare Installationsöffnung (34) aufweist.

14. Retortenofen nach einem der Ansprüche 1 bis 13, **dadurch gekennzeichnet, dass** der Antrieb (28) auf der Klappe (35) angeordnet ist und eine die Klappe (35) gasdicht durchdringende Kolbenstange (29) aufweist, welche mittels eines Koppelelements (30) der Kolbenstange (29) und eines Langlochs (30) des Schwenkarms (22) zur Betätigung des Deckels (25) angelenkt ist.

## Claims

1. A retort furnace (1) for thermal treatment of metallic workpieces, having a retort (3) designed cylindrically, which is surrounded by a furnace housing (2) having a heat device (5), which
a) encloses a treatment chamber (6) for a batch (7) of workpieces,
b) is sealed gas-tight to an end by means of a base (9) and is connected there fluidically to at least two gas-conducting lines (11, 14) each closable by means of a control flap (20, 21) and
c) on the other end has a feeding opening (10) closable gas-tight,
wherein, in order to cool the batch (7) of workpieces, a stream of gas is sucked out of the retort (3), is conducted via an external cooling device, and subsequently conducted back again into the retort (3) and a cold gas is circulated, **characterized in that**
d) the base (9) in forming an intermediate space comprises a second base (9.1) and said intermediate space is divided by a first volume space (16) and a second volume space (17) into two annular spaces separated gas-tight from each other, which first volume space (16) is connected with the second line (14) and which second volume space (17) is connected with the first line (11), whereby the circulation of the cold gas by means of a streamlined cool volume flow and thus a cooling down of the batch (7) can be accelerated,
e) by means of the lines (11, 14) or suction pipes (19) connecting volume spaces (16, 17) the hot gas located in the retort (3) can be sucked off and the sucked-off gas can be conducted away via the inner annular space of the base (9) of the retort (3), which is designed with double walls,
f) the inner annular space is connected to a cooler (12), which can conduct the sucked off gas, wherein the gas as cool gas can be streamed again into the treatment chamber (6) of the retort by means of a cool gas blower (13) via the outer annular space of the double-walled base (9) of the retort (3) and
g) as a result such a flow circulation arises in the interior of the retort (3), which makes the hot furnace atmosphere able to be conducted away from the inner area of the volume space enclosed by the retort (3) and at the same time makes it possible to track the cool gas in the outer border area of the volume space enclosed by the retort, namely by addition of the volume flows of the external cooling blower on the one hand and of a circulation device (8) arranged in the retort (3) on the other hand.

2. A retort furnace (1) according to claim 1, **characterized in that**
h) the first and second control flaps (20, 21) each form a housing (36) comprising a receiving space (33), in which a lid (25) can be moved such that the flow cross-section of each line (11, 14) is completely released in the open position of the lid (25) and
i) the first volume space (16) and the second volume space (17) in the fluidic interaction with the functions of the lid (25) completely releasing the flow cross-section of each line (11, 14) in the open position of the lid (25) lead to a streamlined circulation of the cold gas and thus to a rapid cooling off of the batch (7).

3. A retort furnace according to claim 1 or 2, **characterized in that** the outer diameter of the second base (9.1) of the base (9) is measured smaller than the inner diameter of the retort (3).

4. A retort furnace according to one of claims 1 to 3, **characterized in that** the outer first volume space (16) is connected fluidically via the second line (14) to the external cool gas blower (13).

5. A retort furnace according to one of claims 1 to 3, **characterized in that** the inner second volume space (17) is connected fluidically via the first line (11) to an external cooler (12).

6. A retort furnace according to one of claims 1 to 5, **characterized in that** the inner second volume space (17) is connected to the suction pipes (19), which are connected with the treatment chamber (6) enclosed by the retort (3).

7. A retort furnace according to one of claims 1 to 6, **characterized in that** the first volume space (16) and the second volume space (17) is divided by a ring (18) into two annular spaces separated gas-tight from each other.

8. A retort furnace according to one of claims 1 to 7, **characterized in that** the lid (25) moveable in the receiving space (33) of the housing (36) of each control flap (20, 21) has a pivot arm (22) which is arranged pivotably about a pivot point (32) on a support arm (27).

9. A retort furnace according to one of claims 1 to 8, **characterized in that** the pivot arm (22) is arranged on the support arm (27) pivotable by > 90°.

10. A retort furnace according to one of claims 1 to 9, **characterized in that** the pivot arm (22) is connected with a drive (28).

11. A retort furnace according to one of claims 1 to 10, **characterized in that** the drive (28) is formed by a pneumatic adjust cylinder.

12. A retort furnace according to one of claims 1 to 11, **characterized in that** the housing (36) is detachably arranged by means of a first flange connection (23) and a second flange connection (24) in each one of the lines (11, 14).

13. A retort furnace according to one of claims 1 to 12, **characterized in that** the housing (36) has an installation opening (34) closable by means of a flap (35).

14. A retort furnace according to one of claims 1 to 13, **characterized in that** the drive (28) is arranged on the flap (35) and has a piston rod (29) penetrating the flap (35) gas-tight, which is hinged by means of a coupling element (30) of the piston rod (29) and an elongated hole (30) of the pivot arm (22) for operation of the lid (25).

## Revendications

1. Four à cornue (1) destiné au traitement thermique de pièces métalliques, comportant une cornue (3) de forme cylindrique, qui est entourée par le carter (2) du four, muni d'un dispositif de chauffage (5) et qui
a) délimite une enceinte de traitement (6) pour une charge (7) de pièces,
b) est fermée à une extrémité de manière étanche au gaz par un fond (9) et, à cet emplacement, est raccordée selon la technique des fluides à au moins deux conduites (11, 14) pour la circulation du gaz, aptes à être fermées chacune par un clapet de réglage (20, 21), et
c) comporte, au niveau de l'autre extrémité, une ouverture de chargement (10) apte à être fermée de manière étanche au gaz,
dans lequel, en vue du refroidissement de la charge (7) de pièces, un flux de gaz est aspiré hors de la cornue (3), guidé au-dessus d'un dispositif de refroidissement externe et ensuite guidé à nouveau vers l'intérieur de la cornue (3) et un gaz froid est mis en circulation, **caractérisé en ce que**
d) le fond (9) comporte un deuxième fond (9.1) moyennant la formation d'un espace intermédiaire, et ledit espace intermédiaire est divisé par une première enceinte volumétrique (16) et une deuxième enceinte volumétrique (17) en deux chambres annulaires séparées l'une de l'autre de manière étanche au gaz, laquelle première enceinte volumétrique (16) est reliée à la deuxième conduite (14) et laquelle deuxième enceinte volumétrique (17) est reliée à la première conduite (11), moyennant quoi la circulation du gaz froid peut être accélérée au moyen d'un flux volumétrique de refroidissement favorable à l'écoulement et donc un refroidissement de la charge (7),
e) le gaz chaud contenu dans la cornue (3) peut être aspiré au moyen des conduites (11, 14) reliant les enceintes volumétriques (16, 17) ou de tubes d'aspiration (19), et le gaz aspiré peut être évacué par l'intermédiaire de la chambre annulaire intérieure du fond (9) à double paroi de la cornue (3),
f) la chambre annulaire intérieure est raccordée à un refroidisseur (12) guidant le gaz aspiré, ledit gaz pouvant être injecté à nouveau en tant que gaz froid dans l'enceinte de traitement (6) de la cornue via la chambre annulaire extérieure du fond (9) à double paroi de la cornue (3), au moyen d'un soufflerie de gaz de refroidissement (13),
g) il en résulte à l'intérieur de la cornue (3) une circulation telle que l'atmosphère chaude du four peut être évacuée hors de la zone intérieure de l'enceinte volumétrique entourée par la cornue (3) et, en même temps, du gaz froid peut être injecté dans la zone de bordure extérieure de l'enceinte volumétrique entourée par la cornue, à savoir en plus des flux volumétriques de la soufflerie de refroidissement externe, d'une part, et d'un dispositif de circulation (8) disposé dans la cornue (3), d'autre part.

2. Four à cornue (1) selon la revendication 1, **caractérisé en ce que**
h) le premier et le deuxième clapet de réglage (20, 21) forment chacun un carter (36), qui contient une chambre de réception (33) et dans lequel peut être introduit un couvercle (25), de telle sorte que la section transversale d'écoulement de chaque conduite (11, 14) est complètement dégagée lorsque le couvercle (25) est en position ouverte, et
i) la première enceinte volumétrique (16) et la deuxième enceinte volumétrique (17), en coopération selon la technique des fluides avec la fonction du couvercle (25) dégageant complètement la section transversale d'écoulement de chaque conduite (11, 14) lorsque le couvercle (25) est en position ouverte, entraîne une circulation du gaz froid, favorable sur le plan fluidique, et donc un refroidissement rapide du charge (7).

3. Four à cornue selon la revendication 1 ou 2, **caractérisé en ce que** le diamètre extérieur du deuxième fond (9.1) du fond (9) est inférieur au diamètre intérieur de la cornue (3).

4. Four à cornue selon l'une quelconque des revendications 1 à 3, **caractérisé en ce que** la première enceinte volumétrique (16) extérieure est raccordée à la soufflerie de gaz de refroidissement (13) externe conformément à la technique des fluides via la deuxième conduite (14).

5. Four à cornue selon l'une quelconque des revendications 1 à 3, **caractérisé en ce que** la deuxième enceinte volumétrique (17) intérieure est raccordée à un refroidisseur (12) externe conformément à la technique des fluides via la première conduite (11).

6. Four à cornue selon l'une quelconque des revendications 1 à 5, **caractérisé en ce que** la deuxième enceinte volumétrique (17) intérieure est raccordée aux tubes d'aspiration (19) qui sont reliés à l'enceinte de traitement (6) entourée par la cornue (3).

7. Four à cornue selon l'une quelconque des revendications 1 à 6, **caractérisé en ce que** la première enceinte volumétrique (16) et la deuxième enceinte volumétrique (17) sont divisées par un anneau (18) en deux chambres annulaires séparées l'une de l'autre de manière étanche au gaz.

8. Four à cornue selon l'une quelconque des revendications 1 à 7, **caractérisé en ce que** le couvercle (25) mobile dans la chambre de réception (33) du carter (36) de chaque clapet de réglage (20, 21) comporte un bras pivotant (22), qui est monté pivotant autour d'un point de rotation (32) dans un bras de retenue (27).

9. Four à cornue selon l'une quelconque des revendications 1 à 8, **caractérisé en ce que** le bras pivotant (22) est monté sur le bras de retenue (27) de manière à pouvoir pivoter sur plus de 90°.

10. Four à cornue selon l'une quelconque des revendications 1 à 9, **caractérisé en ce que** le bras pivotant (22) est relié à un système d'entraînement (28).

11. Four à cornue selon l'une quelconque des revendications 1 à 10, **caractérisé en ce que** le système d'entraînement (28) est constitué par un cylindre de réglage pneumatique.

12. Four à cornue selon l'une quelconque des revendications 1 à 11, **caractérisé en ce que** le carter (36) est disposé de manière amovible dans chacune des conduites (11, 14) au moyen d'un premier assemblage bridé (23) et d'un deuxième assemblage bridé (24).

13. Four à cornue selon l'une quelconque des revendications 1 à 12, **caractérisé en ce que** le carter (36) comporte une ouverture de montage (34) pouvant être fermée par un clapet (35).

14. Four à cornue selon l'une quelconque des revendications 1 à 13, **caractérisé en ce que** le système d'entraînement (28) est disposé sur le clapet (35) et comporte une tige de piston (29), qui traverse le clapet (35) de manière étanche au gaz et qui, en vue de l'actionnement du couvercle (25), est articulée au moyen d'un élément de couplage (30) de la tige de piston (29) et d'un trou oblong (30) du bras pivotant (22).
